# EUROPEAN PATENT SPECIFICATION

(11) **EP 2 839 921 B1**
(45) Date of publication and mention of the grant of the patent: **18.05.2016**
(21) Application number: 14181566.2
(22) Date of filing: 20.08.2014
(51) Int. Cl.: B23P 15/00, B23K 9/167, A47K 1/04, E03C 1/18, B21D 51/18

(54) **A method of manufacturing a sink of stainless steel**
Verfahren zur Herstellung eines Edelstahlausgussbeckens
Procédé de fabrication d'un évier en acier inoxydable

(30) Priority: 20.08.2013 NL 2011319
(43) Date of publication of application: 25.02.2015
(73) Proprietor: Caressi B.V., 7007 CD Doetinchem (NL)
(72) Inventor: Van Steeg, Tom, Huafa Century City, Zhuhai (CN)
(74) Representative: Altenburg, Bernardus Stephanus Franciscus

(56) References cited:
- EP-A1- 1 911 897
- WO-A1-2007/031288
- WO-A1-2012/135029
- GB-A- 1 191 211
- US-A- 2 273 606
- US-A- 5 797 150
- US-A1- 2004 181 870

## Description

The present invention relates to a method of manufacturing a sink of stainless steel, said sink comprising a bottom section, said bottom section having
- a first side facing the lumen of the sink,
- a second side opposite of the first side and facing away from the lumen; and
- a sink hole with an integrated strainer.

In a regular sink, the strainer is a separate item clamped to the edge of the sink hole. As a result, there is an annular transition zone (seam) between the upper side of the bottom section of the sink and the strainer where dirt collects. This is unsightly and hard to clean. In the art, a sink is commercially available that has an integrated strainer and lacks the seam where dirt can collect. It is manufactured by deep drawing, starting from a single sheet of stainless steel. Most sinks for the low end of the market are made using deep drawing. The stainless steel of such sinks has a thickness of 0.6 mm (after drawing) up to at most 0.8 mm. In the high end of the market for sinks, the thickness of the stainless steel is larger, more specifically ≥0.9 mm and in particular 1.0 mm or more. However, stainless steel of this thickness can't be subjected to deep drawing because the stainless steel will tear and cracks will form. As a result, the peculiar situation exists that the attractive feature of a seamless strainer is available for sinks in the low to medium end of the market but not in the high end of the market.

The high end of the market also values sinks having a polished texture at the first side of the bottom section. The object of the present invention is to provide a method for providing a sink with a seamless integrated strainer even if the sink has a relatively large wall thickness (0.9 mm or more) and with a bottom section having a first side comprising a polished texture.

To this end, a method according to the preamble is characterized in that stainless steel is used for the manufacture of the sink, said stainless steel having a polished texture at a first side of the stainless steel at a location that will be part of the bottom section, the method comprising the steps of
- providing a hole in a section of the stainless steel that will form the bottom section,
- bending the edge of the hole away from the first side to form a stub having a distal circumferential edge,
- welding a strainer to the edge of the stub by abutting the circumferential edge of the strainer to the distal circumferential edge of the stub, forming a recess, and
- subjecting the area of the resulting weld inside the recess to a mechanical surface treatment reducing the visibility of said weld.

Thus a sink of relatively large wall thickness can be provided having an integrated strainer without a seam at the upper side of the bottom section where dirt may collect. The polishing treatment can be conveniently carried out because the inner surface of the recess contains the tools for the surface treatment during said treatment. These can be far enough from the first side of the bottom section, thus avoiding the surface texture at the first side of the bottom section to be spoiled by the polishing treatment of the weld. Also, there is no need to polish the whole first side of the bottom section after welding the strainer to the stub so as to reduce the visibility of polishing lines in the polished area that does not correspond to the polished texture of the first side in order to obtain an attractive sink. In contrast, the polished texture, comprising for example striations, is provided before the bending and welding steps, as a result of which this operation can be performed on a flat piece of stainless steel, reducing the cost. The area to be polished in the method according to the invention is comprised inside the recess, and any resulting polishing lines in that area cannot easily be seen from above the sink. Thus the method according to the invention provides a more attractive and cost-efficient sink with an integrated strainer.

In the present application, the term "mechanical surface treatment" comprises grinding and polishing; for reducing the visibility of the weld.

The distance between the distal end of the stub and the first side is for example at least 4 mm, preferably at least 7 mm and more preferably at least 10 mm. Because the polishing tool can be confined to the recess, the operation can be performed quickly.

WO2012135029 considered as the closest prior art discloses a method of manufacturing a sink of stainless steel as per the preamble of claim 1, wherein the drain is disposed below the top surface of the sink basin, such that there is no discernable separation between the base of the sink and the drain when viewed from above the sink. The sink does not comprise an integrated strainer.

GB1191211 discloses a method for manufacturing a sink by providing a stub with a strainer and welding the two together. In contrast to the present invention, the circumferential distal edges of the stub and the strainer are not abutted. Instead, for welding, contact is provided between circumferentially extending area of the main surfaces of the stub and strainer close to their respective distal ends. The resulting seam forms a groove inside the sink in which dirt can accumulate easily, which groove is hard to clean.

According to a favourable embodiment, the first side of the stainless steel is protected by a flexible cover when the stub is formed.

The flexible cover is for example a plastic sheet. Plastic sheet for protecting polished stainless steel is known in the art. The cover will be removed before welding.

According to a favourable embodiment, the hole in the section of the stainless steel that will form the bottom section is cut using a laser.

This allows a precise cut, making it easier to make the weld imperceptible.

According to a favourable embodiment, the strainer is welded to the edge of the hole using MIG or TIG welding.

This results in welds that can be easily polished.

According to a favourable embodiment, a stainless steel sheet is subjected to angle bending operations to form wall sections, adjacent side edges of adjacent wall sections are welded together so as to define together with the bottom section the lumen of the sink, and the strainer is welded to the bottom section, followed by polishing all the welds.

In general, the sink will have four wall sections.

The present invention will now be illustrated with reference to the drawing where
Fig. 1 shows a top view of a sink;
Fig. 2a-e show the stepwise manufacturing of the sink shown in Fig. 1;
Fig. 3 shows a perspective view of the manufactured sink; and
Fig. 4A and Fig. 4B show cross-sectional views and correspond to details of Fig. 2D and Fig. 2E.

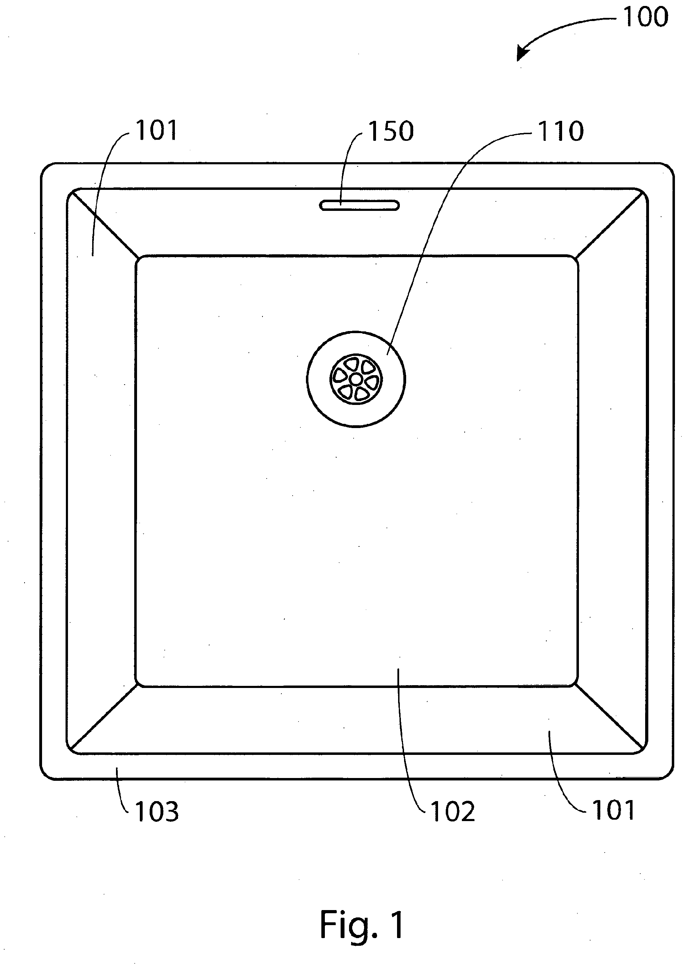

Fig. 1 shows a top view of a sink 100 with wall sections 101 and a bottom section 102. The sink 100 comprises a flange section 103 extending transverse and outwardly from the wall sections 101. In the bottom section 102 there is a strainer 110, and an overflow hole 150.

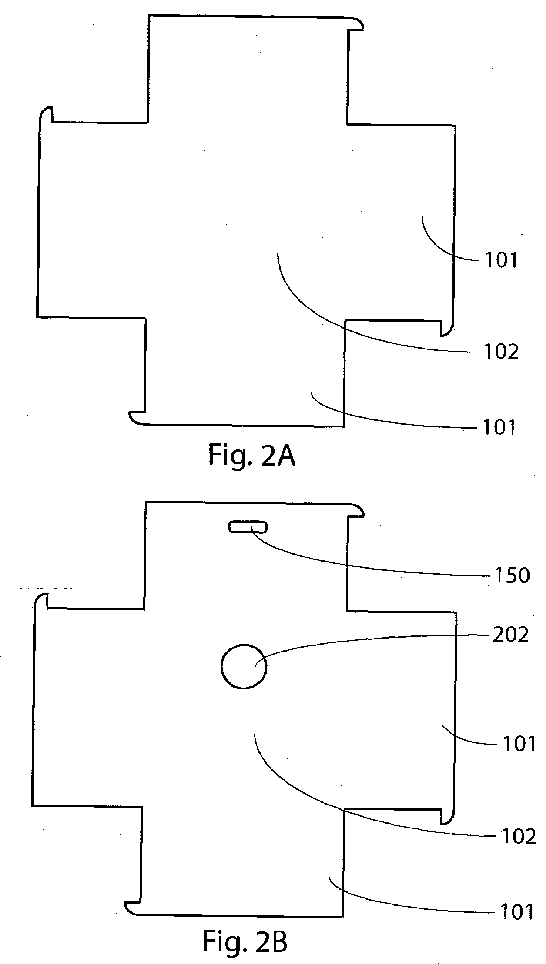

A sink according Fig. 1 is manufactured from a sheet of stainless steel having a thickness of 1 mm cut using a laser (Fig. 2a; top plan view).

Using a laser a hole 202 is cut in the bottom section 102, said hole 202 having a diameter of 75 mm (Fig. 2b; top plan view).

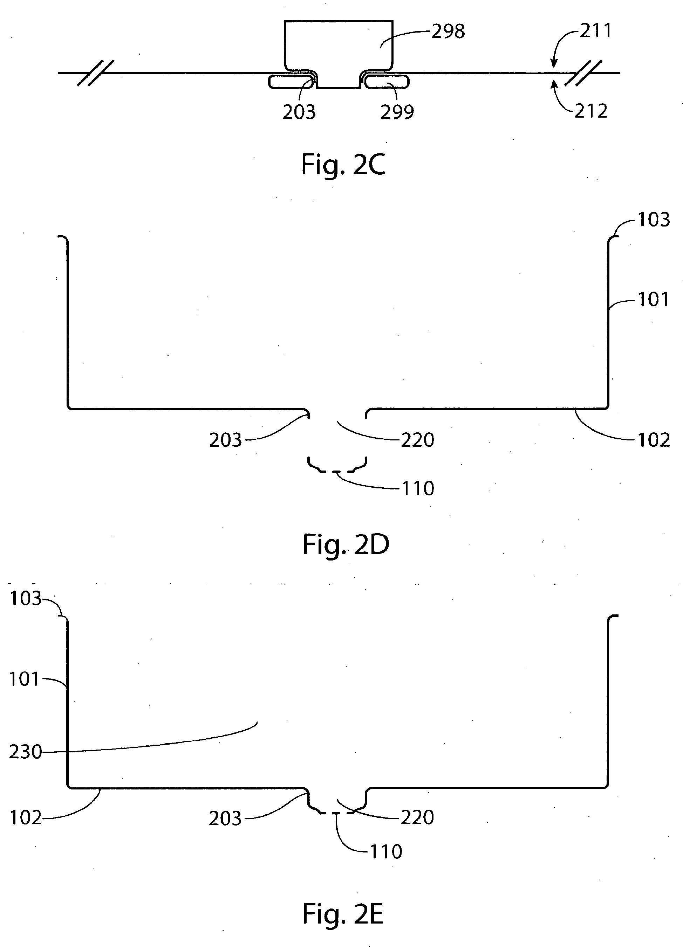

Using a press 298 and a counter form 299, the edge of the hole 202 is bent so as to form a stub 203 having a height of about 10 mm. The stub has an inner diameter of 85 mm (Fig. 2c; cross-sectional view). During pressing, a plastic film (not shown) will be present at the first side 211 so as to protect the polish lines of the first side 211 of the cut sheet 201, since said first side 211 is already polished. The second side 212 will not be in view and does not need to be protected with plastic film.

Flange sections 103 are formed by bending distal ends of the wall sections 101 in a direction away from the first side and the wall sections 101 are bent at their proximal end in a direction away from the second side 212. Then the contacting edges of adjacent wall sections 101 are welded by MIG welding (Fig. 2D; cross-sectional view). The protective plastic film on the first side 211 is removed before welding.

Fig. 2D also shows the strainer 110, to be welded to the stub 203 in the next step.

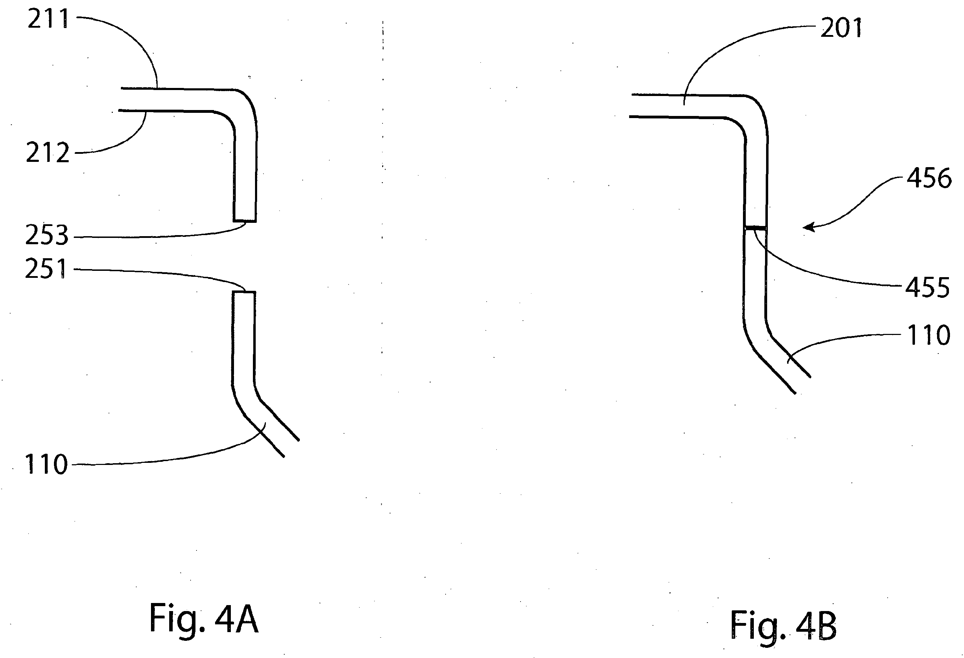

Subsequently, a pressed stainless steel strainer 110 is welded (MIG) to the stub 203 by abutting (see Fig. 4) the circumferential edge 251 of the strainer 110 to the distal circumferential edge 253 of the stub 203, forming recess 220 (Fig. 2E; cross-sectional view).

Advantageously use is made during welding of a rotating table. For example, with the sink 100 upside down and the strainer 110 positioned on top of the stub 203, this assembly is rotated at a constant speed about an axis coinciding with the centreline of the stub 203 so as to obtain a high quality weld 455.

Finally, the welds are polished. This can be done using any technique known in the art for polishing stainless steel. Since the weld 455 from attaching the strainer 110 is comprised in the wall that forms the recess 220, said area 456 not being easily visible from above, development of new polish lines on the first side 211 by polishing said weld can be avoided. This is important, because those polish lines would be circular and not match the polish pattern of the first side 211. The lumen 230 of the finished sink 100 is indicated.

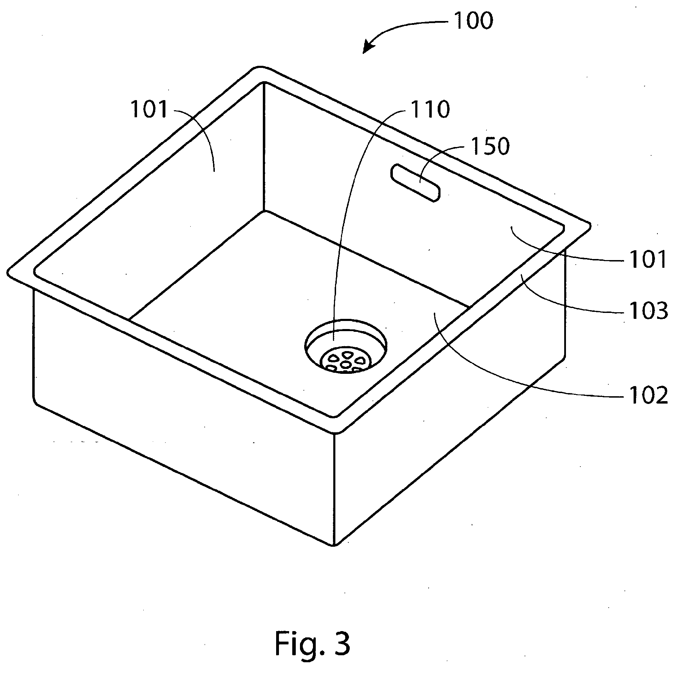

Fig. 3 shows a perspective view of the manufactured sink 100.

The present invention can be varied within the scope of the appended claims. For example, the order of some of the steps described above can be changed. E.g. the angle bending of the wall sections may be performed before the stub 203 is formed. Instead of the plus-shaped cut sheet, a T-shaped cut sheet could be used. It is also possible to weld wall sections to a bottom section, but bending is much quicker and easier and hence preferred.

Fig. 4A and Fig. 4B show cross-sectional views and correspond to details of Fig. 2D and Fig. 2E. Abutting means that the areas brought into contact are not part of a main surface of the first side 211 or second side 212 that is contacted with part of a main surface of the strainer 110, but it is the circumferential edges that represent the thickness of the strainer 110 and the sheet 201 that are contacted and welded. In general, these circumferential edges are in planes transverse to the centrelines of the stub 203 and the strainer 110. The inner diameter of the distal circumferential edge 253 of the stub 203 and the inner diameter of the circumferential edge 251 of the strainer are substantially the same, e.g. differ less than 0.4 mm, preferably less than 0.2 mm and more preferably less than that.

## Claims

1. A method of manufacturing a sink (100) of stainless steel, said sink (100) comprising a bottom section (102), said bottom section (102) having
- a first side (211) facing the lumen (230) of the sink (100),
- a second side (212) opposite of the first side (211) and facing away from the lumen (230); and
- a sink hole (202) with an integrated strainer (110), **characterized in that** stainless steel is used for the manufacture of the sink (100), said stainless steel having a polished texture at a first side of the stainless steel at a location that will be part of the bottom section (102),
the method comprising the steps of
- providing a hole (202) in a section of the stainless steel that will form the bottom section (102),
- bending the edge of the hole (202) away from the first side (211) to form a stub (203) having a distal circumferential edge (253),
- welding a strainer (110) to the edge of the stub (203) by abutting the circumferential edge of the strainer (110) to the distal circumferential edge (253) of the stub (203), forming a recess (220), and
- subjecting the area (456) of the resulting weld (455) inside the recess (220) to a mechanical surface treatment reducing the visibility of said weld.

2. The method according to claim 1, wherein the first side (211) of the stainless steel is protected by a flexible cover when the stub (203) is formed.

3. The method according to claim 1 or 2, wherein the hole (202) in the section of the stainless steel that will form the bottom section (102) is cut using a laser.

4. The method according to any of the preceding claims, wherein the strainer (110) is welded to the edge of the hole (202) using MIG or TIG welding.

5. The method according to any of the preceding claims, wherein a stainless steel sheet (201) is subjected to angle bending operations to form wall sections (101), adjacent side edges of adjacent wall sections (101) are welded together so as to define together with the bottom section (102) the lumen (230) of the sink (100), and the strainer (110) is welded to the bottom section (102), followed by polishing all the welds.

## Patentansprüche

1. Verfahren zur Herstellung eines Edelstahlausgussbeckens (100), wobei das Ausgussbecken (100) einen Bodenbereich (102) aufweist, wobei der Bodenbereich (102) umfasst
- eine erste Seite (211), die in Richtung der lichten Weite (230) des Innenraums des Ausgussbeckens (100) weist,
- eine zweite Seite (212), die der ersten Seite (211) gegenüber liegt, und die der lichten Weite (230) des Innenraums abgewandt ist und
- eine Abflussöffnung (202) mit einem eingebauten Sieb (110),
**dadurch gekennzeichnet,**
**dass** Edelstahl für die Herstellung des Ausgussbeckens (100) verwendet wird, wobei dieser Edelstahl eine glänzende Oberfläche auf der ersten Seite des Edelstahls in einem Bereich aufweist, der Teil des Bodenbereichs (102) sein wird,
wobei das Verfahren folgende Schritte umfasst:
- Vorsehen einer Öffnung (202) in dem Bereich des Edelstahls, der für den unteren Bodenbereich (102) vorgesehen ist,
- Biegen der Ränder der Öffnung (202) weg von der ersten Seite (211), um einen Stutzen (203) zu formen, der eine beabstandete umlaufende Kante (253) aufweist,
- Anschweißen eines Siebes (110) an die Kante des Stutzens (203), indem die Außenkante des Siebes (110) an der beabstandeten umlaufenden Kante (253) des Stutzens (203) anliegend angeordnet wird, wobei eine Ausnehmung (220) geformt wird und
- Durchführen einer mechanischen Oberflächenbearbeitung, im Bereich (456) der resultierenden Schweißnaht (455) in der Ausnehmung (220), um die Sichtbarkeit der besagten Schweißnaht zu reduzieren.

2. Verfahren nach Anspruch 1, wobei die erste Seite (211) des Edelstahls von einer flexiblen Abdeckung geschützt wird, wenn der Stutzen (203) geformt wird.

3. Verfahren nach einem der Ansprüche 1 oder 2, wobei die Öffnung (202) in dem Teil des Edelstahls, der später den Bodenbereich (102) bilden wird, mit Hilfe eines Lasers geschnitten wird.

4. Verfahren nach einem der vorhergehenden Ansprüche, wobei das Sieb (110) an die Kante der Öffnung (202) mittels MIG- oder WIG-Schweißen angeschweißt wird.

5. Verfahren nach einem der vorhergehenden Ansprüche, wobei ein Blech (201) aus Edelstahl einem Abkantverfahren unterworfen wird um Wandabschnitte (101) zu formen, benachbarte Seitenkanten von benachbarten Wandabschnitten (101) zusammen geschweißt werden, so dass sie zusammen mit dem Bodenbereich (102) die lichte Weite (230) des Innenraums des Ausgussbeckens (100) bilden und das Sieb (110) an den unteren Bodenbereich (102) geschweißt wird, gefolgt von einem Glättungsprozess aller Schweißnähte.

## Revendications

1. Procédé pour fabriquer un évier (100) en acier inoxydable, ledit évier (100) comprenant une section de fond (102), ladite section de fond (102) ayant :
- un premier côté (211) faisant face à la lumière (230) de l'évier (100),
- un second côté (212) opposé au premier côté (211) et orienté à distance de la lumière (230) ; et
- un trou d'évier (202) avec une crépine (110) intégrée, **caractérisé en ce que** l'acier inoxydable est utilisé pour la fabrication de l'évier (100), ledit acier inoxydable ayant une texture polie au niveau d'un premier côté de l'acier inoxydable à un emplacement qui fait partie de la section de fond (102),
le procédé comprenant les étapes consistant à :
- prévoir un trou (202) dans une section de l'acier inoxydable qui forme la section de fond (102),
- plier le bord du trou (202) à distance du premier côté (211) afin de former un bout (203) ayant un bord circonférentiel distal (253),
- souder une crépine (110) au bord du bout (203) en mettant en butée le bord circonférentiel de la crépine (110) avec le bord circonférentiel distal (253) du bout (203), formant un évidemment (220), et
- soumettre la zone (456) de la soudure (455) résultante à l'intérieur de l'évidemment (220), à un traitement de surface mécanique réduisant la visibilité de ladite soudure.

2. Procédé selon la revendication 1, dans lequel le premier côté (211) de l'acier inoxydable est protégé par un couvercle flexible lorsque le bout (203) est formé.

3. Procédé selon la revendication 1 ou 2, dans lequel le trou (202) dans la section de l'acier inoxydable qui forme la section de fond (102), est découpé à l'aide d'un laser.

4. Procédé selon l'une quelconque des revendications précédentes, dans lequel la crépine (110) est soudée au bord du trou (202) à l'aide du soudage MIG ou TIG.

5. Procédé selon l'une quelconque des revendications précédentes, dans lequel une feuille d'acier inoxydable (201) est soumise à des opérations de cintrage d'angle afin de former des sections de paroi (101), les bords latéraux adjacents des sections de paroi adjacentes (101) sont soudés ensemble afin de définir conjointement avec la section de fond (102), la lumière (230) de l'évier (100), et la crépine (110) est soudée à la section de fond (102), suivi par le polissage de toutes les soudures.
